# EUROPEAN PATENT APPLICATION

(11) **EP 4 848 519 A1**
(43) Date of publication of application: **02.12.2026**
(21) Application number: 24920235.9
(22) Date of filing: 24.05.2024
(51) Int. Cl.: H02J 3/38, H02J 3/12

(54) **POWER CONVERTER CONTROL DEVICE, POWER CONVERTER CONTROL METHOD, AND POWER CONVERTER CONTROL PROGRAM**

(30) Priority: 26.01.2024 JP 2024009961
(71) Applicant: Nissin Electric Co., Ltd., Kyoto-shi, Kyoto 615-8686 (JP)
(72) Inventor: MAGOME, Ren, Kyoto-shi, Kyoto 615-8686 (JP); KAWASAKI, Yoshinori, Kyoto-shi, Kyoto 615-8686 (JP)
(74) Representative: Becker, Eberhard
(86) International application number: PCT/JP2024/019222
(87) International publication number: WO 2025/158685

(57) **Abstract**

This power converter control device for controlling a voltage output by a power converter connected to a power line for supplying power from a power system to a load includes: an opposing voltage calculation unit for calculating an opposing voltage that is a voltage having the same phase and the same amplitude as the voltage of the power system; a voltage change amount calculation unit for acquiring an output current command value that is a current output to the power converter, and calculating a voltage change amount when the power converter outputs the output current command value by open control from the output current command value; and a voltage command value output unit for outputting a voltage command value, which is a voltage obtained by combining the opposing voltage and the voltage change amount, to the power converter.

## Description

### Technical Field

The present invention relates to a power converter control device, a power converter control method, and a power converter control program.

### Background Art

Power fluctuations in a load or a distributed power source connected to a power line of a power system may cause fluctuations in voltage and frequency of the power system. A power converter control device has been used to connect a power converter to the power line of the power system, and control the output voltage to suppress the voltage and frequency fluctuations of the power system. The power converter converts direct current (DC) power from a DC power source such as a solar cell or a storage battery to alternating current (AC) power.

A power converter control device of this type may include, for example, a phase control unit that calculates the phase of a voltage output by a power converter from a deviation between an active power command value and an active power output value, and an amplitude control unit that calculates the amplitude of the voltage output by the power converter from a deviation between a reactive power command value and a reactive power output value, as shown in Non-Patent Document 1. The power converter control device determines a control amount of the voltage output by the power converter based on the output values of the phase control unit and the amplitude control unit.

### Related Art Document

### Patent Document

Non-Patent Document 1: "Efforts on Practical Application of Inertia Reduction Countermeasures under the Transition to Renewable Energy as Main Power Source," Journal of the Institute of Electrical Engineers of Japan, Vol. 143, No. 4, April 1, 2023

### SUMMARY OF THE INVENTION

### Problem to be Solved by the Invention

However, in the case where the voltage of a power line drops due to a power line short-circuit accident or the like in the power system, the active power output value and the reactive power output value of a conventional power converter control device decrease. Therefore, the control amount of the voltage output by the power converter increases, and there is a risk that a current larger than the command value may flow.

Furthermore, with the recent transition to renewable energy as a main power source, it is anticipated that a plurality of distributed power sources may be connected to the same bus via respective power converters. In this case, if the voltage output by the power converter is feedback-controlled, as in the power converter control device described above, the control amount to be fed back may fluctuate due to the control amounts of other power converters, potentially leading to an unstable phenomenon such as flicker.

Accordingly, the present invention has been made in view of the above problems, and the present invention aims mainly to cause a power converter to output a current according to a command value regardless of fluctuations in the voltage of the power system.

### Means for Solving the Problem

That is, the power converter control device according to the present invention is a power converter control device for controlling a voltage output by a power converter connected to a power line, the power converter control device including: an opposing voltage calculation unit calculating an opposing voltage that is a voltage having the same phase and the same amplitude as a voltage of the power system; a voltage change amount calculation unit acquiring an output current command value and calculating a voltage change amount at a time when the power converter outputs the output current command value from the output current command value by open control; and a voltage command value output unit outputting a voltage command value obtained by combining the opposing voltage and the voltage change amount to the power converter.

With such a configuration, the opposing voltage is a voltage having the same phase and the same amplitude as the voltage of the power system, and the voltage command value output unit outputs the voltage command value obtained by combining the opposing voltage and the voltage change amount to the power converter, so that the voltage of the power system is canceled by the opposing voltage, and only the voltage change amount is applied to the interconnection transformer and the interconnection reactor of the power converter. Therefore, the power converter can output a current in accordance with the output current command value regardless of fluctuations in the voltage of the power system.

In addition, since the voltage change amount calculation unit calculates the voltage change amount by open control, the voltage change amount does not fluctuate due to the control amount of another distributed power source even if a plurality of distributed power sources are connected to the same bus. Therefore, for example, even in the case where a plurality of distributed power sources are connected to the same bus, it is possible to prevent an unstable phenomenon such as flicker.

The output current command value is preferably at least one of a fundamental wave positive-sequence active current, a fundamental wave positive-sequence reactive current, a fundamental wave negative-sequence current, and a non-fundamental wave frequency current.

With such a configuration, in the case where the voltage change amount calculation unit acquires a fundamental wave positive-sequence active current and a fundamental wave positive-sequence reactive current, fluctuations in voltage or fluctuations in frequency of the power system can be suppressed. Further, in the case where the voltage change amount calculation unit acquires a fundamental wave negative-sequence current, an imbalance of a fundamental wave voltage or a fundamental wave current can be suppressed. Furthermore, in the case where the voltage change amount calculation unit acquires a non-fundamental wave frequency current, a harmonic voltage distortion can be suppressed.

A voltage-controlled inverter (hereinafter, also referred to as a GFM inverter) that supplies an inertial force to the power line is particularly prone to an overcurrent due to fluctuations in the voltage of the power system, as compared to other power converters.

Therefore, the power converter to be controlled by the power converter control device is preferably a voltage-controlled inverter that supplies an inertial force to the power line.

With such a configuration, since the current output from the power converter is the output current command value regardless of fluctuations in the voltage of the power system, an overcurrent of the GFM inverter can be prevented.

The voltage change amount calculation unit further includes a positive-sequence voltage calculation unit that calculates a positive-sequence voltage as the voltage change amount, and the positive-sequence voltage calculation unit acquires the output current command value and a phase of the power system, and calculates the positive-sequence voltage to be in synchronization with the phase of the power system from the output current command value by open control.

With such a configuration, the power converter outputs a voltage obtained by combining the opposing voltage and the positive-sequence voltage, so that the voltage of the power system is canceled by the opposing voltage, and only a positive-sequence voltage corresponding to the output current command value is output from the power converter.

The positive-sequence voltage calculation unit preferably calculates an instantaneous voltage value of active power and an instantaneous voltage value of reactive power respectively from an active current command value and a reactive current command value by open control, and calculates the positive-sequence voltage by combining the instantaneous voltage value of active power and the instantaneous voltage value of reactive power.

With such a configuration, since the positive-sequence voltage calculation unit calculates the instantaneous voltage value of active power and the instantaneous voltage value of reactive power, it is possible to achieve both suppression of frequency fluctuation and suppression of voltage fluctuation.

Specifically, since the positive-sequence voltage calculation unit calculates the instantaneous voltage value of active power, active power is supplied to the power system in the case where the frequency of the power system decreases, and active power is supplied to the power converter in the case where the frequency of the power system increases. Therefore, frequency fluctuation can be suppressed.

Further, since the positive-sequence voltage calculation unit calculates the instantaneous voltage value of reactive power, reactive power is supplied to the power system in the case where a connection point voltage, which is a voltage at a location where the power system and the power converter voltage are connected, decreases, and reactive power is supplied to the power converter in the case where the connection point voltage increases. Therefore, voltage fluctuation can be suppressed.

For example, when a large number of non-rotating generators such as current-controlled solar power generators that do not have an inertial force are connected to the power system as a main power source, the power system may become unstable due to an insufficient inertial force of a rotating machine-type generator for supply and demand adjustment.

Therefore, the output current command value acquired by the positive-sequence voltage calculation unit is preferably an active current command value including an inertial force and a reactive current command value including an inertial force.

With such a configuration, in the case where the power converter converts the DC power from a non-rotating generator into AC power, a sufficient inertial force can be supplied to the load, and the power system can be stabilized. It is noted that "including an inertial force" means that a generator that supplies power to the load has a capability of autonomously reducing a frequency change of the power system.

The voltage change amount calculation unit further includes a negative-sequence voltage calculation unit that calculates a negative-sequence voltage as the voltage change amount, and the negative-sequence voltage calculation unit acquires a phase command value of the negative-sequence voltage and the output current command value, and calculates the negative-sequence voltage from the phase command value of the negative-sequence voltage and the output current command value by open control.

In addition, the voltage change amount calculation unit further includes a non-fundamental wave component calculation unit that calculates a non-fundamental wave component, which is a frequency different from a fundamental frequency of the power system, as the voltage change amount, and the non-fundamental wave component calculation unit acquires a phase command value of the non-fundamental wave component and the output current command value, and calculates the non-fundamental wave component from the phase command value of the non-fundamental wave component and the output current command value by open control.

With such a configuration, a current for compensating a voltage imbalance or a non-fundamental wave component can be output from the power converter, making it possible to suppress an equivalent negative-sequence current of the generator, and prevent heating damage of a winding or improve a utilization rate of the generator. In addition, since the negative-sequence voltage or the non-fundamental wave component can be output as desired, a harmonic voltage distortion or a voltage imbalance caused by a single-phase load or a rectifier load can be suppressed, making it possible to improve power quality.

Further, since a voltage combined with the opposing voltage is output from the power converter in addition to the negative-sequence voltage or the non-fundamental wave component, the voltage of the power system is canceled by the opposing voltage, and only the negative-sequence voltage or the non-fundamental wave component is output to the power system. Therefore, it is possible to reliably output only the negative-sequence voltage or the non-fundamental wave component from the power converter regardless fluctuations in the voltage of the power system.

A power converter control method is provided for controlling a voltage output by a power converter connected to a power line for supplying power from a power system to a load, the power converter control method including: calculating an opposing voltage that is a voltage having the same phase and the same amplitude as a voltage of the power system; acquiring an output current command value that is a current output by the power converter, and calculating a voltage change amount at a time when the power converter outputs the output current command value from the output current command value by open control; and outputting a voltage obtained by combining the opposing voltage and the voltage change amount from the power converter.

Further, a power converter control program is provided for controlling a voltage output by a power converter connected to a power line for supplying power from a power system to a load, the power converter control program causing a computer to perform: a function as an opposing voltage calculation unit calculating an opposing voltage that is a voltage having the same phase and the same amplitude as a voltage of the power system; a function as a voltage change amount calculation unit acquiring an output current command value that is a current output by the power converter, and calculating a voltage change amount at a time when the power converter outputs the output current command value from the output current command value by open control; and a function as a voltage command unit outputting a voltage obtained by combining the opposing voltage and the voltage change amount from the power converter.

Such a configuration can achieve the same effects as the power converter control device described above.

### Effects of the Invention

According to the present invention configured as described above, the power converter can output a current in accordance with a command value regardless of fluctuations in the voltage of the power system.

### BRIEF DESCRIPTION OF THE DRAWINGS

[FIG. 1] is a schematic diagram showing a configuration of a power system in the present embodiment.

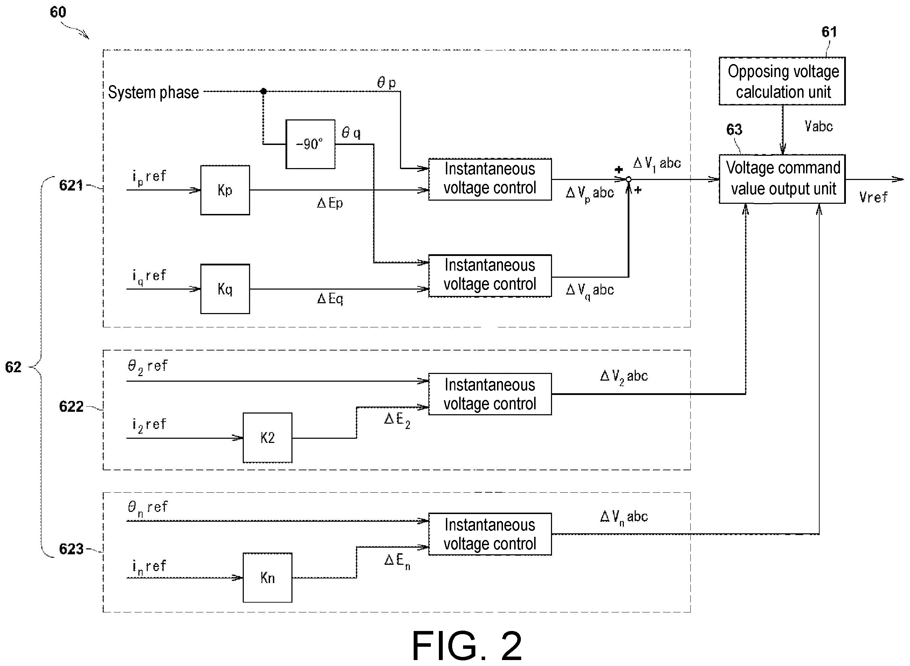

[FIG. 2] is a diagram showing a functional block of a power converter control device in the same embodiment.
[FIG. 3] is a simulation result showing an output waveform of a power converter in the same embodiment.
[FIG. 4] is a simulation result showing an output waveform of the power converter at the time of a short circuit in the same embodiment.
[FIG. 5] is a simulation result showing a voltage waveform output by the power converter and a voltage waveform of the power system at the time of a short circuit in the same embodiment.
[FIG. 6] is a diagram showing a functional block of a power converter control device in another embodiment.

### DESCRIPTION OF THE EMBODIMENTS

An embodiment of a power system according to the present invention will be described below with reference to the drawings. For clarity, any part of the following drawings may be omitted as appropriate or depicted schematically in an exaggerated manner. Identical reference numerals are assigned to identical components, and descriptions thereof may be omitted as appropriate.

### <System Configuration>

A power system 100 in the present embodiment is a system connected to a power line B for supplying power from a power system 10 to a load 20, and supplying AC power to the load 20. Specifically, the power system 100 includes a DC power source 30 that supplies DC power, a power converter 40 that converts the DC power into AC power and supplies the AC power to the power line B, a measurement unit 50 that measures a current flowing through the power line B or a voltage of the power line B, and a power converter control device 60 that controls a voltage output by the power converter 40. In the present embodiment, a distributed power source 70 is connected to the power line B in parallel with the power system 100. Each unit will be described below.

The DC power source 30 is, for example, a non-rotating generator such as a solar power generator or a wind power generator, or a power storage device such as a storage battery or a secondary battery.

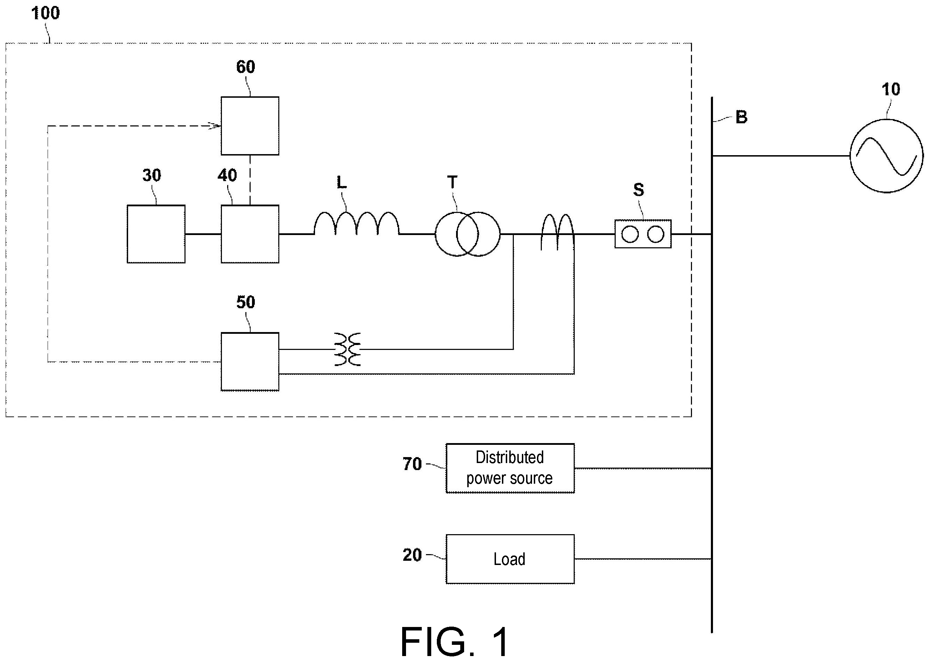

The power converter 40 converts DC power supplied from the DC power source 30 into AC power and supplies the AC power to the power line B. Specifically, the power converter 40 is a GFM inverter (grid forming inverter) that is a voltage-controlled inverter and is capable of supplying an inertial force to the power line B. Further, as shown in FIG. 1, the power converter 40 is connected to the power line B via a circuit breaker S, an interconnection transformer T, and an interconnection reactor L from the high voltage side as viewed from the power line B.

The measurement unit 50 has a function as a voltage measurement unit that measures the voltage of the power line B, for example, by a known instrument transformer, and a function as a current measurement unit that measures the current flowing through the power line B, for example, by a known instrument current transformer. Specifically, the measurement unit 50 measures the current and voltage between the circuit breaker S and the interconnection transformer T, as shown in FIG. 1. Here, the voltage measured by the measurement unit 50 corresponds to the voltage of the power system 10.

The power converter control device 60 is a dedicated or general-purpose computer including a CPU, an internal memory, an input/output interface, an A/D converter, and the like, and controls the voltage output by the power converter 40 based on a predetermined command value. Specifically, the power converter control device 60 includes an opposing voltage calculation unit 61 that calculates an opposing voltage Vabc, which is a voltage having the same phase and the same amplitude as the voltage of the power system 10, a voltage change amount calculation unit 62 that calculates a voltage change amount at the time when the power converter 40 outputs an output current command value, which is a current to be output from the power converter 40, and a voltage command value output unit 63 that outputs a voltage command value Vref, which is a command value of the voltage to be output from the power converter 40. The power converter control device 60 may be integrated with the power converter 40 or may be a different device from the power converter 40.

The opposing voltage calculation unit 61 acquires the voltage measured by the measurement unit 50, calculates a voltage having the same phase and the same amplitude as the voltage measured by the measurement unit 50, and sets the calculated voltage as the opposing voltage Vabc. The phase used by the opposing voltage calculation unit 61 when calculating the opposing voltage Vabc may be acquired from the voltage measured by the measurement unit 50 or from phase information input via an input means (not shown) from an external source.

The voltage change amount calculation unit 62 acquires the output current command value, which is a current to be output from the power converter 40, and calculates the voltage change amount at the time when the power converter 40 outputs the output current command value from the output current command value by open control. The open control mentioned here means that the voltage change amount is calculated from the output current command value by a known calculation method without feedback of the voltage output by the power converter 40.

In the present embodiment, the output current command value includes at least one of an active current command value iₚref and a reactive current command value i_{q}ref which are command values of currents for suppressing fluctuations in the voltage of the power system 10, a negative-sequence current command value I₂ref which is a command value of a current for suppressing an imbalance of a fundamental wave voltage and a fundamental wave current, and a non-fundamental wave current command value Iₙref which is a command value of a current for suppressing a harmonic voltage distortion.

In the present embodiment, the voltage change amount includes at least one of a positive-sequence voltage change amount ΔV₁abc which is a voltage change amount at the time when the power converter 40 outputs the active current command value iₚref and the reactive current command value i_{q}ref, a negative-sequence voltage change amount ΔV₂abc which is a voltage change amount at the time when the power converter 40 outputs the negative-sequence current command value I₂ref, and a non-fundamental wave component change amount ΔVₙabc which is a voltage change amount at the time when the power converter 40 outputs the non-fundamental wave current command value Iₙref.

Specifically, the voltage change amount calculation unit 62 includes a positive-sequence voltage calculation unit 621 that calculates the positive-sequence voltage change amount ΔV₁abc, a negative-sequence voltage calculation unit 622 that calculates the negative-sequence voltage change amount ΔV₂abc, and a non-fundamental wave component calculation unit 623 that calculates the non-fundamental wave component change amount ΔVₙabc.

The positive-sequence voltage calculation unit 621 acquires the output current command value and the phase of the power system 10, and calculates the positive-sequence voltage change amount ΔV₁abc to be in synchronization with the phase of the power system 10 from the output current command value by open control. Specifically, the positive-sequence voltage calculation unit 621 calculates an instantaneous voltage value ΔVₚabc of active power and an instantaneous voltage value ΔV_{q}abc of reactive power respectively from the active current command value iₚref and the reactive current command value i_{q}ref by open control, and calculates the positive-sequence voltage change amount ΔV₁abc by combining the instantaneous voltage value ΔVₚabc of active power and the instantaneous voltage value ΔV_{q}abc of reactive power. A method for the positive-sequence voltage calculation unit 621 to calculate the positive-sequence voltage change amount ΔV₁abc will be described below.

The positive-sequence voltage calculation unit 621 acquires the active current command value iₚref and the reactive current command value i_{q}ref via an input means (not shown) from an external source. Here, the active current command value iₚref and the reactive current command value i_{q}ref include an inertial force. It is noted that "including an inertial force" means that the power converter 40 has a capability of autonomously reducing a frequency change of the power system 100.

Then, the positive-sequence voltage calculation unit 621 calculates a voltage amplitude command value ΔEp of active power and a voltage amplitude command value ΔEq of reactive power by multiplying the active current command value iₚref and the reactive current command value i_{q}ref by an active current gain Kp corresponding to an active current and a reactive current gain Kq corresponding to a reactive current, respectively. In the present embodiment, the voltage amplitude command value ΔEp of active power and the voltage amplitude command value ΔEq of reactive power are root mean square (RMS) values. Here, the active current gain Kp and the reactive current gain Kq are determined by an interconnection impedance, which is an impedance of a device that connects the power converter 40 to the power line B. The interconnection impedance is determined to be about 10% to 15% with respect to a device capacity of the device to be connected. Here, the device capacity of the device to be connected refers to, for example, a device capacity of the interconnection transformer T and a device capacity of a harmonic filter reactor inside the power converter 40.

Further, the positive-sequence voltage calculation unit 621 acquires the phase of the power system 10 from the voltage measured by the measurement unit 50. Then, the positive-sequence voltage calculation unit 621 calculates a first phase θp that is the same phase as the power system 10 and a second phase θq that is a phase delayed by 90 degrees from the phase of the power system 10. The positive-sequence voltage calculation unit 621 may acquire the phase of the power system 10 from phase information input via an input means (not shown) from an external source.

Then, the positive-sequence voltage calculation unit 621 calculates the instantaneous voltage value ΔVₚabc of active power by positive-sequence instantaneous voltage control, which is control that converts an RMS value of voltage into an instantaneous value of voltage, from the voltage amplitude command value ΔEp of active power and the first phase θp. Further, the positive-sequence voltage calculation unit 621 calculates the instantaneous voltage value ΔV_{q}abc of reactive power by positive-sequence instantaneous voltage control from the voltage amplitude command value ΔEq of reactive power and the second phase θq. Then, the positive-sequence voltage calculation unit 621 calculates the positive-sequence voltage change amount ΔV₁abc by combining the instantaneous voltage value ΔVₚabc of active power and the instantaneous voltage value ΔV_{q}abc of reactive power.

The negative-sequence voltage calculation unit 622 acquires a phase command value θ₂ref of a negative-sequence voltage and the negative-sequence current command value I₂ref, and calculates the negative-sequence voltage change amount ΔV₂abc from the phase command value θ₂ref of the negative-sequence voltage and the negative-sequence current command value I₂ref by open control. A method for the negative-sequence voltage calculation unit 622 to calculate the negative-sequence voltage change amount ΔV₂abc will be described below.

The negative-sequence voltage calculation unit 622 acquires the phase command value θ₂ref of the negative-sequence voltage and the negative-sequence current command value I₂ref via an input means (not shown) from an external source.

Next, the negative-sequence voltage calculation unit 622 calculates a voltage amplitude command value ΔE2 of the negative-sequence voltage by multiplying the negative-sequence current command value I₂ref by a predetermined gain K2. The gain K2 is determined by an interconnection impedance, in a similar manner to the active current gain Kp and the reactive current gain Kq.

Then, the negative-sequence voltage calculation unit 622 calculates the negative-sequence voltage change amount ΔV₂abc from the voltage amplitude command value ΔE2 of the negative-sequence voltage and the phase command value θ₂ref of the negative-sequence voltage by negative-sequence instantaneous voltage control.

The non-fundamental wave component calculation unit 623 acquires a phase command value θn of a non-fundamental wave component and the non-fundamental wave current command value Iₙref, and calculates the non-fundamental wave component change amount ΔVₙabc from the phase command value θn of the non-fundamental wave component and the non-fundamental wave current command value Iₙref by open control. The non-fundamental wave component in the present embodiment refers to, for example, a harmonic component or an inter-harmonic component. A method for the non-fundamental wave component calculation unit 623 to calculate the non-fundamental wave component change amount ΔVₙabc will be described below.

The non-fundamental wave component calculation unit 623 acquires the phase command value θn of the non-fundamental wave component and the non-fundamental wave current command value Iₙref via an input means (not shown) from an external source. Here, the phase command value θn of the non-fundamental wave component and the non-fundamental wave current command value Iₙref are values determined by an order of the non-fundamental wave component.

Next, the non-fundamental wave component calculation unit 623 calculates a voltage amplitude command value ΔEn of the non-fundamental wave component by multiplying the non-fundamental wave current command value Iₙref by a predetermined gain Kn. In the case where an inductive component of the interconnection impedance is dominant (that is, in the case where a resistive component is sufficiently negligible with respect to the inductive component), the gain Kn is determined by multiplying the interconnection impedance by the order of the non-fundamental wave component.

Then, the non-fundamental wave component calculation unit 623 calculates the non-fundamental wave component change amount ΔVₙabc from the voltage amplitude command value ΔEn of the non-fundamental wave component and the phase command value θₙref of the non-fundamental wave component by instantaneous voltage control.

The voltage command value output unit 63 calculates the voltage command value Vref by combining the opposing voltage Vabc and the voltage change amount, and outputs the voltage command value Vref to the power converter 40. Specifically, the voltage command value output unit 63 calculates the voltage change amount by combining the positive-sequence voltage change amount ΔV₁abc, the negative-sequence voltage change amount ΔV₂abc, and the non-fundamental wave component change amount ΔVₙabc. Then, the voltage command value output unit 63 calculates the voltage command value Vref by combining the opposing voltage Vabc and the voltage change amount. In the case of the voltage command value Vref being output from the voltage command value output unit 63, the power converter 40 outputs a voltage to the load 20 in response to the voltage command value Vref, for example, by PWM control.

### <Simulation Result>

The following shows, by simulation, an output waveform of the power converter 40 in the case where the voltage of the power converter 40 is controlled by the power converter control device 60 of the present embodiment.

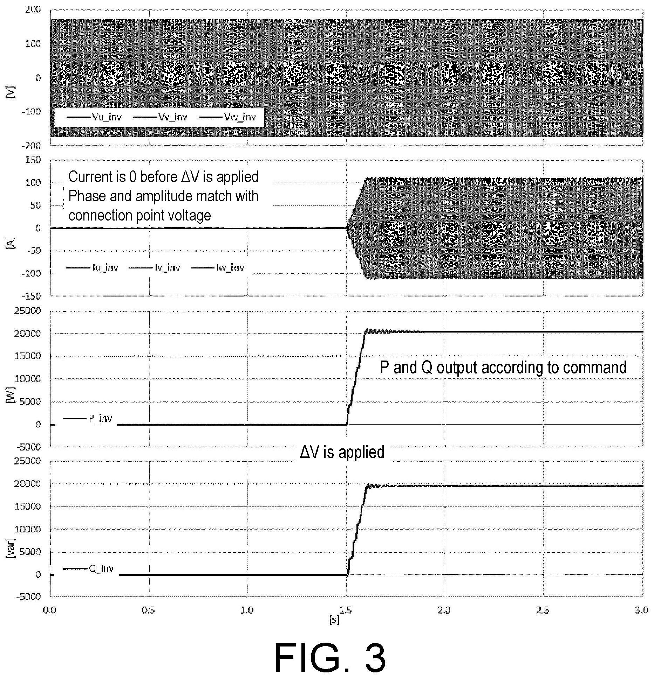

FIG. 3 shows, for example, a voltage waveform, a current waveform, an active power waveform, and a reactive power waveform output by the power converter 40 under control of the power converter control device 60 in a state where there was no abnormality in the power system 10, such as a short-circuit accident. In FIG. 3, the power converter 40 applied the voltage change amount 1.5 seconds after the simulation was started. As can be seen from FIG. 3, it was confirmed that the current output from the power converter 40 was 0 before the power converter 40 applied the voltage change amount. Then, it was confirmed that when the power converter 40 applied the voltage change amount, the active power and the reactive power increased in accordance with the amplitude of the applied voltage change amount.

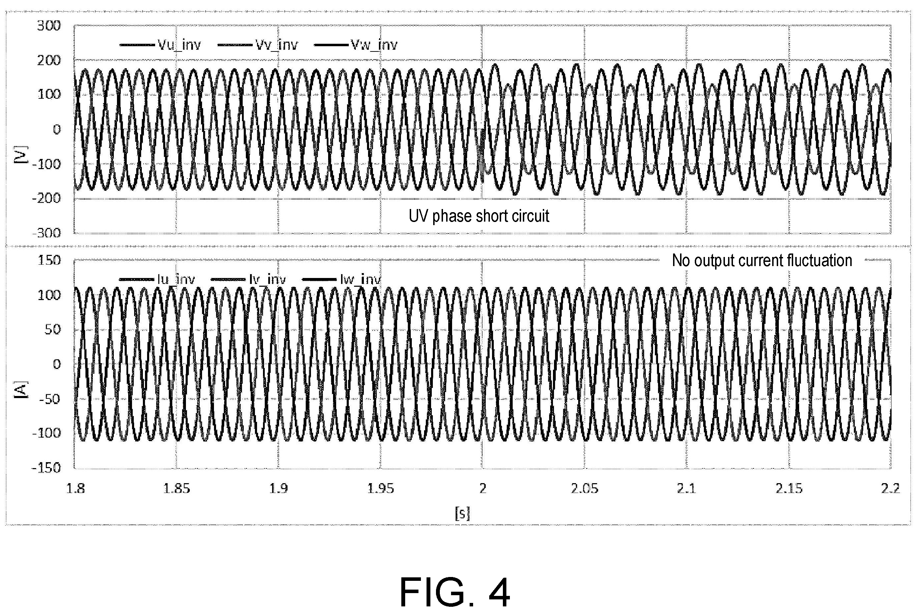

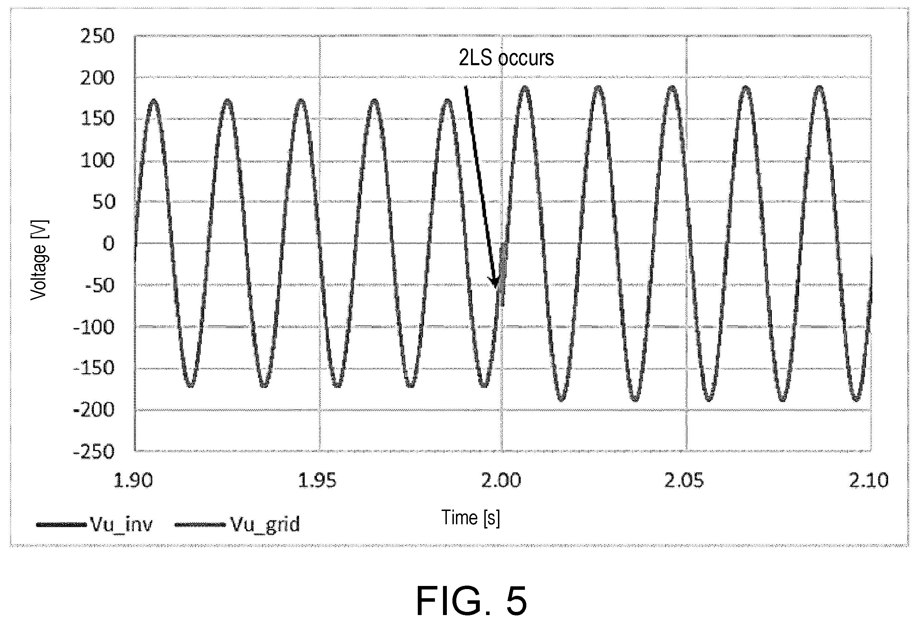

FIG. 4 shows a voltage waveform and a current waveform output by the power converter 40 in the case where the power converter 40 applied the voltage change amount under control of the power converter control device 60 and an abnormality such as a short-circuit accident occurred in the power system 10. In FIG. 4, the power converter 40 applied the voltage change amount 1.5 seconds after the simulation was started, and a two-phase short-circuit accident occurred between 2.0 seconds and 2.2 seconds after the simulation was started. As can be seen from FIG. 4, it is understood that the phase and amplitude of the current output from the power converter 40 did not fluctuate before and after the two-phase short-circuit accident. Therefore, it was confirmed that an overcurrent was prevented from flowing from the power converter 40 regardless of fluctuations in the voltage of the power system 10. Moreover, as shown in FIG. 5, it was confirmed that the phase and amplitude of the voltage output by the power converter 40 were consistent with the phase and amplitude of the voltage of the power system 10 in both a case before the short-circuit accident and a case after the short-circuit accident.

### <Effects of the Present Embodiment>

According to the power converter control device 60 of the present embodiment, the opposing voltage Vabc is a voltage having the same phase and the same amplitude as the voltage of the power system 10, and the power converter 40 outputs the voltage command value Vref that is obtained by combining the opposing voltage Vabc and the voltage change amount. As a result, the voltage of the power system 10 is canceled by the opposing voltage Vabc, and only the voltage change amount is applied to the interconnection transformer T and the interconnection reactor L of the power converter 40. Therefore, the power converter 40 can output a current in accordance with the output current command value regardless of fluctuations in the voltage of the power system 10.

Further, since the voltage change amount calculation unit 62 calculates the voltage change amount by open control, the voltage change amount does not fluctuate due to the control amount of the distributed power source 70 even if the distributed power source 70 is connected to the same power line B. Therefore, even in the case where the DC power source 30 and the distributed power source 70 are connected to the same power line B, it is possible to prevent an unstable phenomenon such as flicker.

### <Other Embodiments>

It is noted that the present invention is not limited to the above-described embodiment.

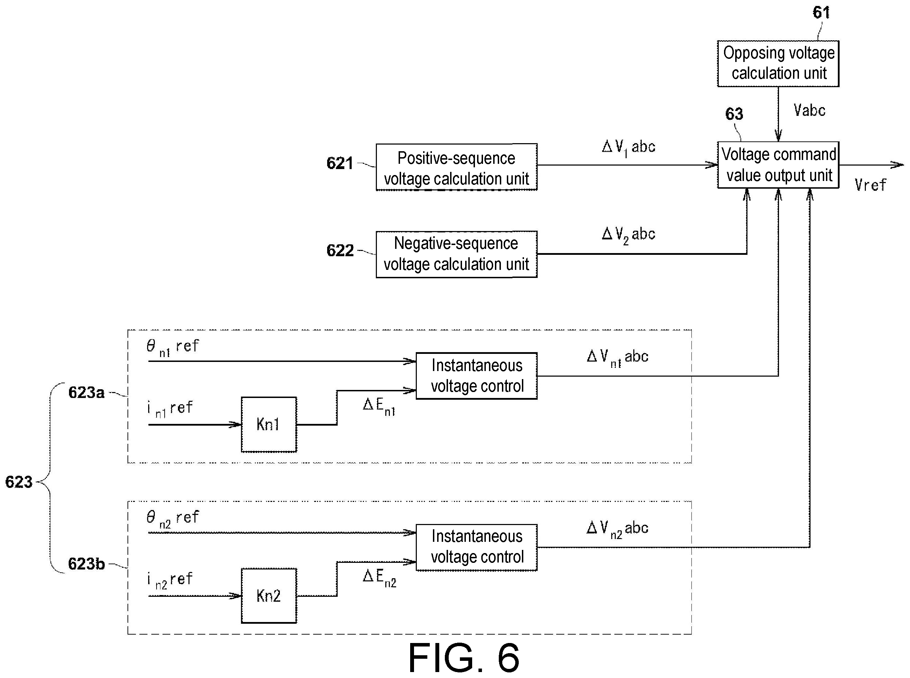

For example, as shown in FIG. 6, the non-fundamental wave component calculation unit 623 may be a unit that calculates different orders of non-fundamental wave components. Specifically, the non-fundamental wave component calculation unit 623 may include a first non-fundamental wave component calculation unit 623a that calculates a first non-fundamental wave component change amount ΔVₙ₁abc corresponding to a first order n1, and a second non-fundamental wave component calculation unit 623b that calculates a second non-fundamental wave component change amount ΔVₙ₂abc corresponding to a second order n2. Here, the order n1 of the first non-fundamental wave component and the order n2 of the second non-fundamental wave component are different from each other. A method of calculating the first non-fundamental wave component change amount ΔVₙ₁abc and the second non-fundamental wave component change amount ΔVₙ₂abc is the same as the method of calculating the non-fundamental wave component change amount ΔVₙabc in the above-described embodiment.

In this case, as shown in FIG. 6, the voltage command value output unit 63 calculates the voltage change amount by combining the positive-sequence voltage change amount ΔV₁abc, the negative-sequence voltage change amount ΔV₂abc, the first non-fundamental wave component change amount ΔVₙ₁abc, and the second non-fundamental wave component change amount ΔVₙ₂abc. Then, the voltage command value output unit 63 calculates the voltage command value Vref by combining the opposing voltage Vabc and the voltage change amount. The non-fundamental wave component calculation unit 623 may calculate three or more different orders of non-fundamental wave components.

In the above-described embodiment, the positive-sequence voltage calculation unit 621, the negative-sequence voltage calculation unit 622, and the non-fundamental wave component calculation unit 623 acquire the command value of the phase of the voltage change amount and the output current command value via an input means (not shown) from an external source, but the present invention is not limited thereto. For example, the command value of the phase of the voltage change amount and the output current command value may be stored in an internal memory of the power converter control device 60, and the positive-sequence voltage calculation unit 621, the negative-sequence voltage calculation unit 622, and the non-fundamental wave component calculation unit 623 may acquire the command values from the internal memory.

In the above-described embodiment, the voltage change amount calculation unit 62 includes the positive-sequence voltage calculation unit 621, the negative-sequence voltage calculation unit 622, and the non-fundamental wave component calculation unit 623. However, the voltage change amount calculation unit 62 may include at least one of the three calculation units.

In the above-described embodiment, the active current command value and the reactive current command value include an inertial force. However, the active current command value and the reactive current command value may not include an inertial force in the case where a sufficient inertial force is supplied to the load 20.

Furthermore, it goes without saying that the present invention is not limited to the embodiments described above, and various modifications may be made without departing from the spirit of the present invention. For example, the exemplary embodiments described above are understood by those skilled in the art as specific examples of the following aspects.

(Aspect 1) A power converter control device, for controlling a voltage output by a power converter connected to a power line for supplying power from a power system to a load, the power converter control device comprising: an opposing voltage calculation unit calculating an opposing voltage that is a voltage having the same phase and the same amplitude as a voltage of the power system; a voltage change amount calculation unit acquiring an output current command value that is a current output by the power converter, and calculating a voltage change amount at a time when the power converter outputs the output current command value from the output current command value by open control; and a voltage command value output unit outputting a voltage command value, which is a voltage obtained by combining the opposing voltage and the voltage change amount, to the power converter.

(Aspect 2) The power converter control device according to aspect 1, wherein the output current command value is at least one of a fundamental wave positive-sequence active current, a fundamental wave positive-sequence reactive current, a fundamental wave negative-sequence current, and a non-fundamental wave frequency current.

(Aspect 3) The power converter control device according to aspect 1 or 2, wherein the power converter is a voltage-controlled inverter that supplies an inertial force to the power line.

(Aspect 4) The power converter control device according to any one of aspects 1 to 3, wherein the voltage change amount calculation unit further comprises a positive-sequence voltage calculation unit that calculates a positive-sequence voltage which is a voltage change amount that compensates for active power of the load, and the positive-sequence voltage calculation unit acquires the output current command value and a phase of the power system, and calculates the positive-sequence voltage to be in synchronization with the phase of the power system from the output current command value by open control.

(Aspect 5) The power converter control device according to aspect 4, wherein the output current command value acquired by the positive-sequence voltage calculation unit is an active current command value including an inertial force and a reactive current command value including an inertial force.

(Aspect 6) The power converter control device according to aspect 4 or 5, wherein the positive-sequence voltage calculation unit calculates an instantaneous voltage value of active power and an instantaneous voltage value of reactive power respectively from an active current command value and a reactive current command value by open control, and calculates the positive-sequence voltage by combining the instantaneous voltage value of active power and the instantaneous voltage value of reactive power.

(Aspect 7) The power converter control device according to any one of aspects 1 to 6, wherein the voltage change amount calculation unit further comprises a negative-sequence voltage calculation unit that calculates a negative-sequence voltage which is a voltage change amount that compensates for a voltage imbalance of the load, and the negative-sequence voltage calculation unit acquires a phase command value of the negative-sequence voltage and the output current command value, and calculates the negative-sequence voltage from the phase command value of the negative-sequence voltage and the output current command value by open control.

(Aspect 8) The power converter control device according to any one of aspects 1 to 7, wherein the voltage change amount calculation unit further comprises a non-fundamental wave component calculation unit that calculates a non-fundamental wave component, which is a frequency different from a fundamental frequency of the power system, as the voltage change amount, and the non-fundamental wave component calculation unit acquires a phase command value of the non-fundamental wave component and the output current command value, and calculates the non-fundamental wave component from the phase command value of the non-fundamental wave component and the output current command value by open control.

(Aspect 9) A power converter control method, for controlling a voltage output by a power converter connected to a power line for supplying power from a power system to a load, the power converter control method comprising: calculating an opposing voltage that is a voltage having the same phase and the same amplitude as a voltage of the power system; acquiring an output current command value that is a current output by the power converter, and calculating a voltage change amount at a time when the power converter outputs the output current command value from the output current command value by open control; and outputting a voltage obtained by combining the opposing voltage and the voltage change amount from the power converter.

(Aspect 10) A power converter control program, for controlling a voltage output by a power converter connected to a power line for supplying power from a power system to a load, the power converter control program causing a computer to perform: a function as an opposing voltage calculation unit calculating an opposing voltage that is a voltage having the same phase and the same amplitude as a voltage of the power system; a function as a voltage change amount calculation unit acquiring an output current command value that is a current output by the power converter, and calculating a voltage change amount at a time when the power converter outputs the output current command value from the output current command value by open control; and a function as a voltage command unit outputting a voltage obtained by combining the opposing voltage and the voltage change amount from the power converter.

### Industrial Applicability

According to the present invention, the power converter can output a current in accordance with a command value regardless of fluctuations in the voltage of the power system. Description of Reference Numerals

100...power system
10...power system
20...load
30...DC power source
40...power converter
50...measurement unit
60...power converter control device
61...opposing voltage calculation unit
62...voltage change amount calculation unit
621...positive-sequence voltage calculation unit
622...negative-sequence voltage calculation unit
623...non-fundamental wave component calculation unit
70...distributed power source
B...power line
S...circuit breaker
T...injection transformer
L...interconnection reactor

## Claims

1. A power converter control device, for controlling a voltage output by a power converter connected to a power line for supplying power from a power system to a load, the power converter control device comprising:
an opposing voltage calculation unit calculating an opposing voltage that is a voltage having the same phase and the same amplitude as a voltage of the power system;
a voltage change amount calculation unit acquiring an output current command value that is a current output by the power converter, and calculating a voltage change amount at a time when the power converter outputs the output current command value from the output current command value by open control; and
a voltage command value output unit outputting a voltage command value, which is a voltage obtained by combining the opposing voltage and the voltage change amount, to the power converter.

2. The power converter control device according to claim 1, wherein the output current command value is at least one of a fundamental wave positive-sequence active current, a fundamental wave positive-sequence reactive current, a fundamental wave negative-sequence current, and a non-fundamental wave frequency current.

3. The power converter control device according to claim 1, wherein the power converter is a voltage-controlled inverter that supplies an inertial force to the power line.

4. The power converter control device according to claim 1, wherein the voltage change amount calculation unit further comprises a positive-sequence voltage calculation unit that calculates a positive-sequence voltage as the voltage change amount, and
the positive-sequence voltage calculation unit acquires the output current command value and a phase of the power system, and calculates the positive-sequence voltage to be in synchronization with the phase of the power system from the output current command value by open control.

5. The power converter control device according to claim 4, wherein the output current command value acquired by the positive-sequence voltage calculation unit is an active current command value including an inertial force and a reactive current command value including an inertial force.

6. The power converter control device according to claim 4, wherein the positive-sequence voltage calculation unit calculates an instantaneous voltage value of active power and an instantaneous voltage value of reactive power respectively from an active current command value and a reactive current command value by open control, and calculates the positive-sequence voltage by combining the instantaneous voltage value of active power and the instantaneous voltage value of reactive power.

7. The power converter control device according to claim 1, wherein the voltage change amount calculation unit further comprises a negative-sequence voltage calculation unit that calculates a negative-sequence voltage as the voltage change amount, and
the negative-sequence voltage calculation unit acquires a phase command value of the negative-sequence voltage and the output current command value, and calculates the negative-sequence voltage from the phase command value of the negative-sequence voltage and the output current command value by open control.

8. The power converter control device according to any one of claims 1 to 7, wherein the voltage change amount calculation unit further comprises a non-fundamental wave component calculation unit that calculates a non-fundamental wave component, which is a frequency different from a fundamental frequency of the power system, as the voltage change amount, and
the non-fundamental wave component calculation unit acquires a phase command value of the non-fundamental wave component and the output current command value, and calculates the non-fundamental wave component from the phase command value of the non-fundamental wave component and the output current command value by open control.

9. A power converter control method, for controlling a voltage output by a power converter connected to a power line for supplying power from a power system to a load, the power converter control method comprising:
calculating an opposing voltage that is a voltage having the same phase and the same amplitude as a voltage of the power system;
acquiring an output current command value that is a current output by the power converter, and calculating a voltage change amount at a time when the power converter outputs the output current command value from the output current command value by open control; and
outputting a voltage obtained by combining the opposing voltage and the voltage change amount from the power converter.

10. A power converter control program, for controlling a voltage output by a power converter connected to a power line for supplying power from a power system to a load, the power converter control program causing a computer to perform:
a function as an opposing voltage calculation unit calculating an opposing voltage that is a voltage having the same phase and the same amplitude as a voltage of the power system;
a function as a voltage change amount calculation unit acquiring an output current command value that is a current output by the power converter, and calculating a voltage change amount at a time when the power converter outputs the output current command value from the output current command value by open control; and
a function as a voltage command unit outputting a voltage obtained by combining the opposing voltage and the voltage change amount from the power converter.
